# EUROPEAN PATENT SPECIFICATION

(11) **EP 4 256 219 B1**
(45) Date of publication and mention of the grant of the patent: **09.10.2024**
(21) Application number: 20820071.7
(22) Date of filing: 01.12.2020
(51) Int. Cl.: F16H 61/00

(54) **VALVE UNIT FOR A GEARBOX CONTROL UNIT OF A COMMERCIAL VEHICLE AND CORRESPONDING GEARBOX CONTROL UNIT**
VENTILEINHEIT FÜR EINE GETRIEBESTEUEREINHEIT EINES NUTZFAHRZEUGS UND ENTSPRECHENDE GETRIEBESTEUEREINHEIT
UNITÉ DE SOUPAPE POUR UNE UNITÉ DE COMMANDE DE BOÎTE DE VITESSES D'UN VÉHICULE UTILITAIRE ET UNITÉ DE COMMANDE DE BOÎTE DE VITESSES CORRESPONDANTE

(43) Date of publication of application: 11.10.2023
(73) Proprietor: ZF CV Systems Europe BV, 1170 Brüssel (BE)
(72) Inventor: CHETKIEWICZ, Maciej, 55-093 Katna (PL); OBOROWSKI, Przemyslaw, 59-830 Olszyna (PL); SALATYCKI, Mateusz, 45-223 Opole (PL)
(74) Representative: Ohlendorf, Henrike
(86) International application number: PCT/EP2020/084022
(87) International publication number: WO 2022/117175

(56) References cited:
- WO-A1-2008/006637
- DE-A1- 10 130 833
- KR-A- 20160 004 716

## Description

The invention relates to a valve unit for a gearbox control unit of a commercial vehicle, said gearbox control unit comprising a flexible printed circuit for connecting the valve unit to the gearbox control unit.

In the commercial vehicle industry, valve units are utilized in gearbox control units of automated manual transmission (AMT) devices. For connecting the valve unit to the gearbox control unit, flexible printed circuits are used. In state of the art valve units, such flexible printed circuits are, for example, directly soldered to the valve unit, are reinforced by plastic holders or are glued to the valve unit. This has been well proven to avoid vibrations and unwanted sound emissions. The described solutions, however, are often difficult to assemble, and are destroyed when the components need to be dissembled.

KR 2016 0004716 A shows a valve unit for a gearbox control unit, wherein said valve unit comprises a valve block and a flexible printed circuit and wherein said unit further comprises a fixation plate assembly including a fixation plate.

Further valve units are disclosed in WO 2008/006637A1 and DE 101 30 833 A1.

Therefore, it was an object of the invention to provide a valve unit for a gearbox control unit of a commercial vehicle that overcomes the above-mentioned issues as far as possible. In particular, it was an object of the invention to provide a valve unit that allows for an easy assembling and damage-free disassembling of the components while ensuring that the components form a durable and vibration free connection when assembled.

According to the invention the object is solved by a valve unit according to claim 1.

Preferred embodiments are laid down in the dependent claims.

According to the invention, it is proposed that said valve unit comprises a fixation plate assembly comprising a fixation plate, wherein the flexible printed circuit is attached to the fixation plate, and wherein said fixation plate assembly is attached to said valve block.

The invention is based on the finding that the connectability of the flexible printed circuit to the valve block is significantly increased by utilizing a fixation plate assembly as defined above. It is ensured that the flexible printed circuit is safely attached to the structurally rigid fixation plate, which avoids vibrations at the flexible printed circuit and reduces noise. Furthermore, the fixation plate assembly can be releasably attached to the valve block allowing an easy assembling and disassembling of the components. Moreover, the number of required parts is low and the overall appearance of the valve unit is compact.

According to the invention, the valve unit comprises at least one receiving means arranged at the valve block, the receiving means being configured to couple pivotally with the fixation plate and limit its movement in a first direction. According to a preferred embodiment, the receiving means are configured to couple pivotally and releasably with the fixation plate. Preferably, the first direction extends along a longitudinal axis of the valve block. In this way, the fixation plate can be connected to the receiving means of the valve block at first, and thereafter hinged in the direction of the valve block. Additionally, the receiving means limits the movement of the fixation plate in a first direction.

According to a preferred embodiment, the receiving means comprises a first receiving hook, said first receiving hook protruding from said valve block and wherein said first receiving hook is configured to couple pivotally with the fixation plate. Such a first receiving hook has been found to be easy to manufacture and particularly suitable to provide the aspired function.

Preferably, the receiving means comprises a second receiving hook, said second receiving hook protruding from a top surface of said valve block and being spaced apart from the first receiving hook, wherein the first receiving hook and the second receiving hook are configured to couple pivotally with the fixation plate. With the help of such first receiving hook and second receiving hook, the overall guidance of the fixation plate is improved. Moreover, a tilting of the fixation plate is avoided.

According to another preferred embodiment, the fixation plate comprises a coupling section for coupling with the receiving means, wherein the coupling section comprises a cutout extending from an outer edge of the fixation plate inwardly. Such a coupling section comprising a cutout has been found to be beneficial to provide more compact valve unit. Preferably, the cutout may be rectangular extending from the outer periphery of the fixation plate inwardly.

According to yet another preferred embodiment, the valve block comprises at least one rail configured to support the fixation plate assembly when the fixation plate assembly is mounted to the valve block. Such a rail ensures that the contact area between the valve block and the fixation plate assembly is increased so that vibrations and noise emissions are inhibited. Furthermore, the structural integrity is increased. Preferably, the valve block comprises two rails that are arranged in parallel to one another. This configuration helps to further increase the structural integrity of the valve unit.

In a further aspect or in a further embodiment according to the first aspect, the valve block comprises at least one locking means protruding from the valve block, and wherein the fixation plate comprises at least one corresponding cutout for receiving the locking means. In other words, the at least one locking means is guided through at least one cutout arranged in the fixation plate when the fixation plate is attached to the valve block. After having inserted the locking means into the cutout, the locking means provides a locking functionality releasably attaching the fixation plate to the valve block.

According to a preferred embodiment, the locking means comprises at least one locking hook, said locking hook limiting a movement of the fixation plate assembly in a second direction, the second direction being opposite from the first direction. Such a locking hook has been found to be beneficial to provide a releasable locking functionality by also limiting the movement of the fixation plate in a second direction.

Preferably, said locking hook comprises a top section having a sloped surface, said sloped surface being configured to push the fixation plate towards the valve block when the fixation plate assembly is moved in the second direction. In this way, an elastic deformation is applied to the fixation plate, which generates a preload on both sides of the fixation plate. Thereby, it is ensured that the fixation plate does not vibrate or generate unwanted noise during operation.

Preferably, the valve block comprises a stopping means for limiting the movement of the fixation plate in the second direction. Such a stopping means has been found to be beneficial to further simplify the assembly process.

According to yet another preferred embodiment, the fixation plate comprises at least one centre hole and wherein the valve unit comprises a corresponding threaded bore configured for receiving a tensioning screw to be guided through the centre hole, for fixing the fixation plate assembly to the valve block. With the help of such centre hole, it is ensured that the fixation plate occupies its assigned position even if the fixation plate is not positioned exactly on the assigned position. Furthermore, the use of a tensioning screw ensures that the preload generated at the fixation plate is maintained to avoid any vibrations and unwanted noise emissions.

According to another preferred embodiment, said locking means comprises a plurality of locking hooks, wherein said locking hooks are arranged in a row, said row extending along the first direction. The use of a plurality of locking hooks arranged in a row further improves the durability of the connection between the valve block and the fixation plate assembly.

Preferably, said locking hooks are arranged in a first row and a second row, said rows extending along the first direction, and wherein the first row is parallel to the second row. Again, the quality of the connection between the valve block and the fixation plate assembly is improved. Furthermore, in case of a damage to one of said locking hooks, a durable connection between the mentioned components is maintained. Hence, a fail-safe design philosophy is incorporated.

According to yet another preferred embodiment, said first row is arranged at a first outer edge of the valve block and said second row is arranged at a second outer edge of the valve block, and wherein said first outer edge is opposite from the second outer edge. Preferably, the said first row and said second row are arranged perpendicular to a pivot axis of said fixation plate. The mentioned arrangement of said first row and said second row has been found to be beneficial to durably connect the components and also simplify the manufacturing of the components.

In a further aspect, the invention relates to a gearbox control unit for a commercial vehicle, said gearbox control unit comprising a bottom housing section configured to be attached to a gearbox of a vehicle, a top cover, the top cover being releasably attached to the bottom housing section, and a valve unit accommodated within said bottom housing section. According to the invention, the valve unit is a valve unit according to any of the embodiments mentioned above.

The gearbox control unit takes advantage of the same benefits and preferred embodiments as the valve unit according to the invention. In this regard, reference is made to the above explanations and their content is included herein.

In yet another aspect, which is not part of the present invention, it relates to a method for assembling a valve unit according to any of the above described embodiments, the method comprising the steps: providing a fixation plate assembly comprising a fixation plate and a flexible printed circuit attached thereto, providing a valve block, connecting the fixation plate assembly to the valve block while the fixation plate assembly is folded away from the valve unit, rotating the fixation plate assembly towards the valve block such that cutouts in the fixation plate receive locking means protruding from the valve block, and moving the fixation plate assembly to engage the locking means with the cutouts.

Preferably, the method, which is not part of the present invention, further comprises the step of fixing the fixation plate assembly to the valve block.

The method for assembling a valve unit takes advantage of the same benefits and preferred embodiments as the valve unit and the gearbox control unit according to the invention. In this regard, reference is made to the above explanations and their content is included herein.

The aspects of the present invention, which is defined by the appended claims, may best be understood from the following detailed description taken in conjunction with the accompanying figures. The figures are schematic and simplified for clarity, and they just show details to improve the understanding of the claims while other details are left out. Throughout, the same reference numerals are used for identical or corresponding parts. The individual features of each aspect may each be combined with any or all features of other aspects.

These and other aspects, features and/or technical effects will be apparent from and elucidated with reference to the illustrations described hereafter, which show in:
- Fig. 1:: a preferred embodiment of a gearbox control unit comprising a valve unit according to the concept of the invention in a perspective view;
- Figs. 2 - 8:: the valve unit according to the embodiment shown in Fig. 1 in perspective views showing different assembly steps.

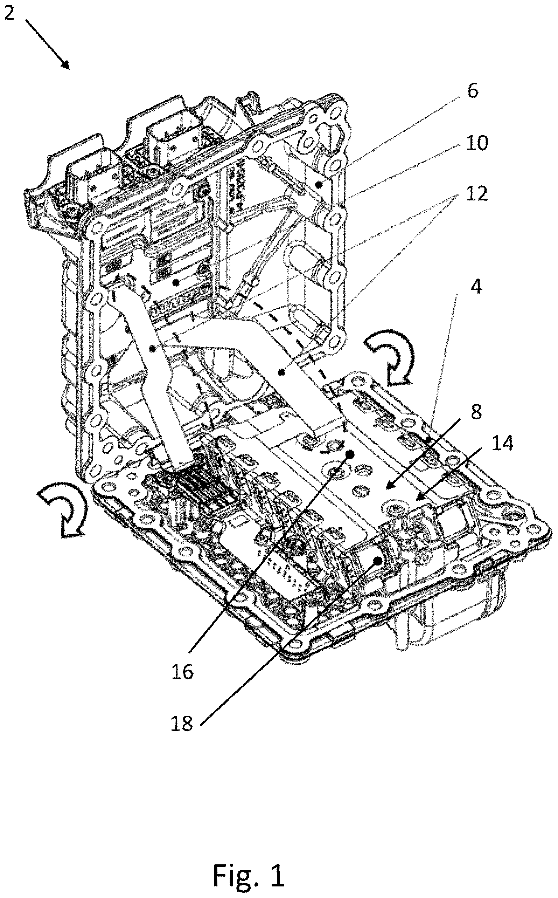

Fig. 1 shows a gearbox control unit 2 for a commercial vehicle. The gearbox control unit 2 comprises a bottom housing section 4. The bottom housing section 4 is configured to be attached to a gearbox of a vehicle (not shown). The gearbox control unit 2 furthermore comprises a top cover 6. The top cover 6 is releasably attached to the bottom housing section 4. A valve unit 8 is accommodated within said bottom housing section 4. In the top cover 6, an electronic control unit 10 is accommodated.

The valve unit 8 comprises a valve block 18. The valve unit 8 furthermore comprises a fixation plate assembly 14. The fixation plate assembly 14 comprises a fixation plate 16. Attached to the fixation plate 16 is a flexible printed circuit 12. The gearbox control unit 2 furthermore comprises a second flexible printed circuit 12 connecting the top cover 6 with the bottom housing section 4.

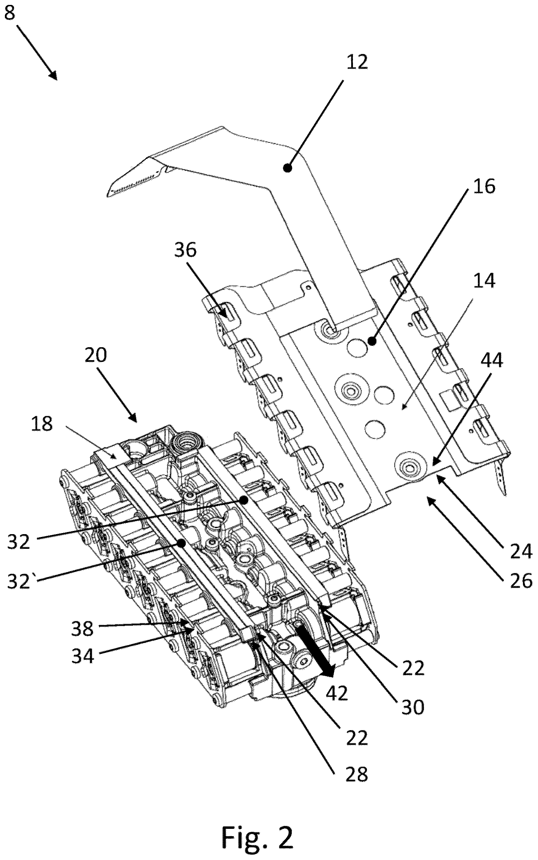

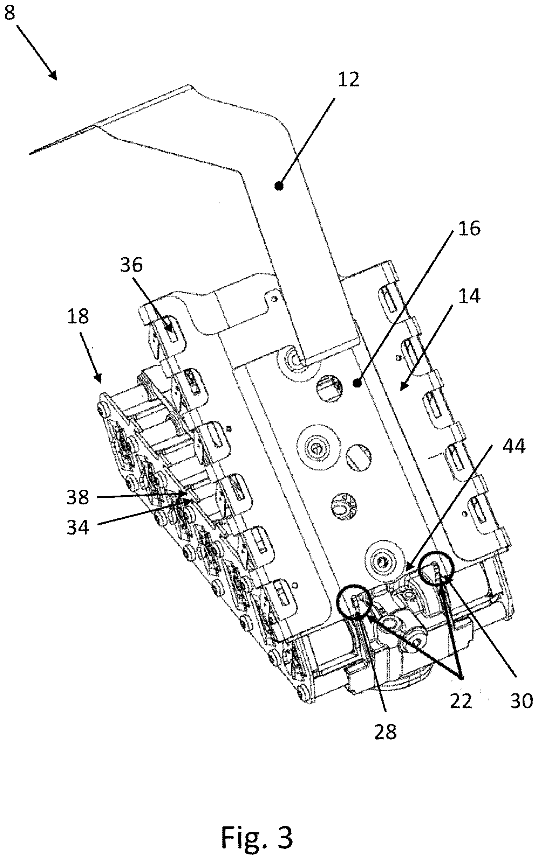

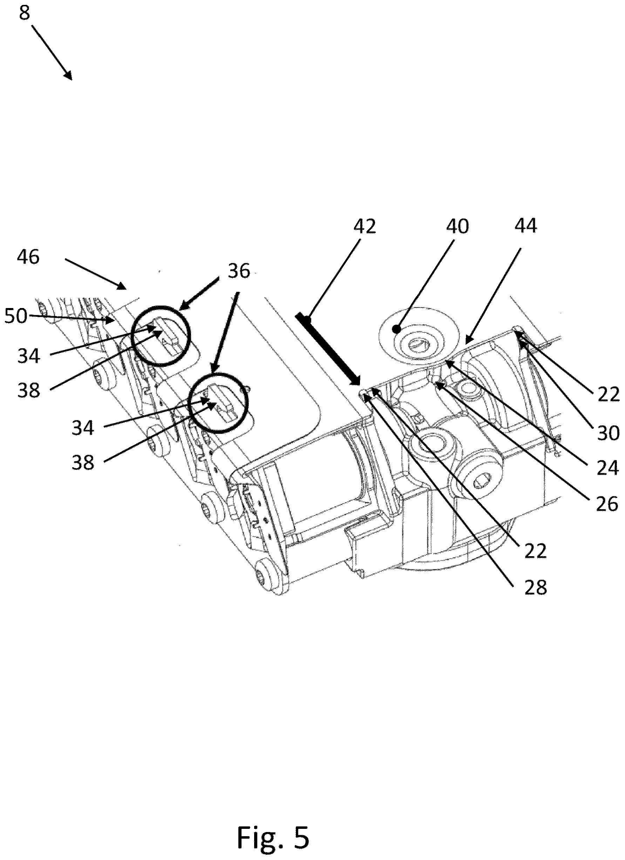

Figs. 2-8 show a valve unit 8 according to the invention. Referring to Fig. 2, the valve unit 8 comprises the valve block 18 and the fixation plate assembly 14. Attached to the fixation plate 16 is the flexible printed circuit 12. The valve block 18 furthermore comprises a receiving area 20 for receiving said fixation plate assembly 14. The valve block 18 comprises receiving means 22. The receiving means 22 are configured to couple pivotally with the fixation plate 16. Furthermore, the receiving means 22 limit the movement of the fixation plate 16 in a first direction 42.

The receiving means 22 comprise a first receiving hook 28. The receiving means 22 furthermore comprise a second receiving hook 30. The first receiving hook 28 and the second receiving hook 30 protrude from said valve block 18. The second receiving hook 30 is spaced apart from the first receiving hook 28. The first receiving hook 28 and the second receiving hook 30 are configured to couple pivotally with the fixation plate 16. This can best be seen in Fig. 2.

The fixation plate 16 comprises a coupling section 24 for coupling with the receiving means 22. The coupling section 24 comprises a cutout 26 extending from an outer edge 44 of the fixation plate 16 inwardly. The valve block 18 comprises two rails 32, 32'. The rails 32, 32' are configured to support the fixation plate assembly 14 when the fixation plate assembly 14 is mounted to the valve block 18. The rails 32, 32' are arranged in parallel to one another.

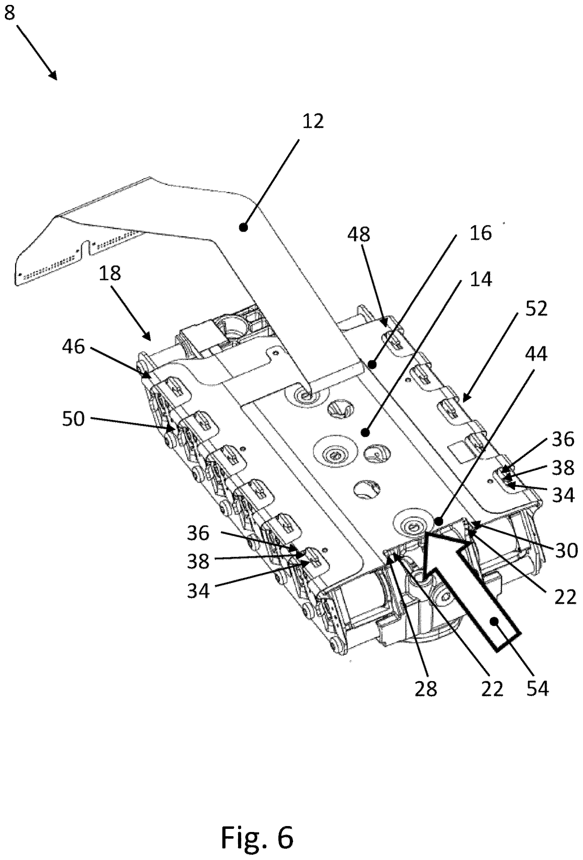

The valve block 18 furthermore comprises locking means 34. The locking means 34 protrude from the valve block 18. The fixation plate 16 comprises corresponding cutouts 36 for receiving the locking means 34. The locking means 34 comprise locking hooks 38. Said locking hooks 38 limit a movement of the fixation plate assembly 14 in a second direction 54, see Fig. 6. The second direction 54 is opposite of the first direction 42.

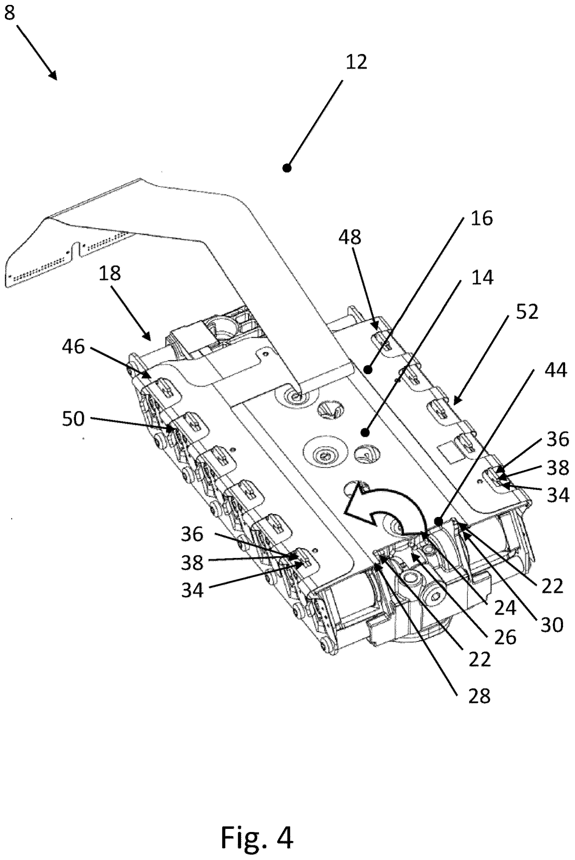

As shown in Fig. 4, the locking hooks 38 are arranged in a first row 46 and a second row 48 extending along the first direction 42. The first row 46 is parallel to the second row 48. Said first row 46 is arranged at a first outer edge 50 of the valve block 18. The second row 48 is arranged at a second outer edge 52 of the valve block 18. The first outer edge 50 is opposite from the second outer edge 52.

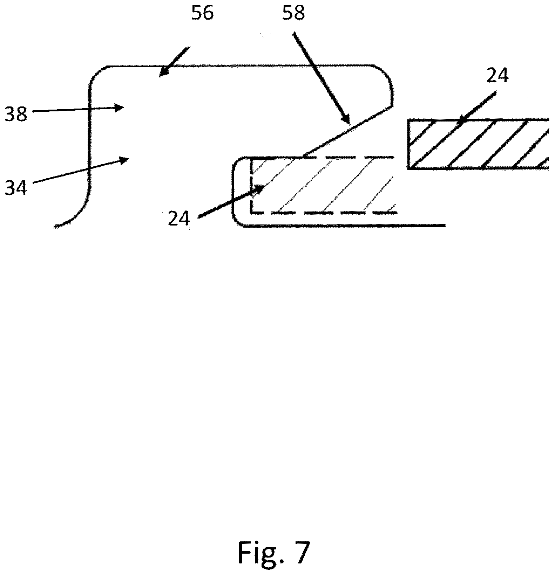

Fig. 7 shows a detailed perspective of said locking hook 38. The locking hook 38 comprises a top section 56 having a sloped surface 58. The sloped surface 58 is configured to push the fixation plate 16 towards the valve block 18 when the fixation plate assembly 14 is moved in the second direction 54.

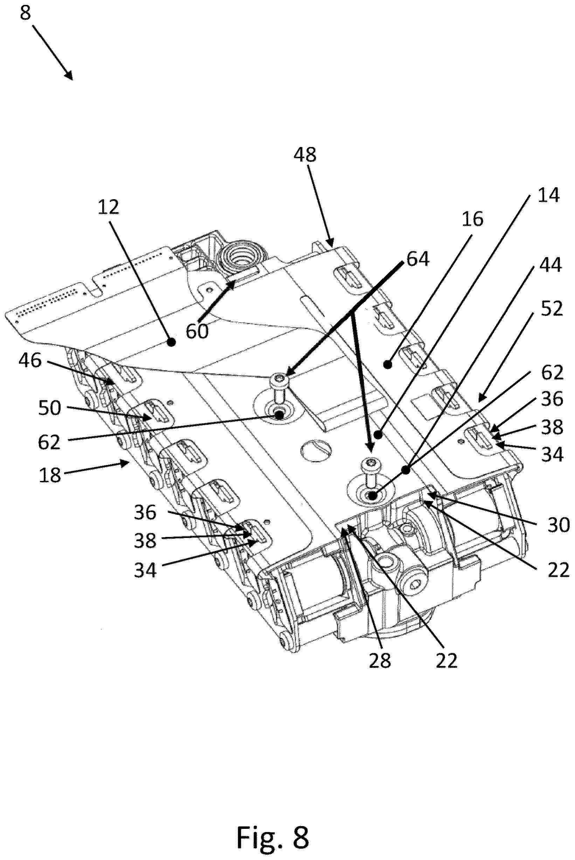

As shown in Fig. 8, the valve block 18 comprises a stopping means 60. The stopping means 60 limits the movement of the fixation plate 16 in the second direction 54. The fixation plate 16 furthermore comprises a centring bore 40. The valve unit 8 comprises a corresponding threaded bore 62. The threaded bore 62 is configured for receiving a tensioning screw 64. The tensioning screw 64 is guided through the centring bore 40 into the threaded bore 62. With the help of the tensioning screw 64, the fixation plate assembly 14 is secured to the valve block 18.

As described in Figs. 2 to 8, the fixation plate assembly 14 is mounted to the valve block 18 as follows: First of all, the fixation plate assembly 14 is connected to the receiving area 20 of the valve block 18 while the fixation plate assembly 14 is folded away from the valve unit 8. Secondly, the fixation plate assembly 14 is rotated towards the valve block 18, such that the cutouts 36 in the fixation plate 16 receive the locking means 34 that protrude from the valve block 18. Finally, when the fixation plate assembly 14 abuts against the valve block 18, the fixation plate assembly 14 is moved in the second direction 54 to engage the locking means 34 with the cutouts 36. Finally, the fixation plate assembly 14 is fixed to the valve block 18 with the help of the tensioning screws 64. To disassemble the fixation plate assembly 14 from the valve block 18, the above described steps are carried out in reverse order.

Due to the geometry of the locking hooks 38, in particular the sloped surface 58 of the top section 56, the fixation plate 16 is elastically deformed and preloaded, such that vibrations and noise emissions caused by potential vibrations of the fixation plate assembly 14 are inhibited.

### List of references (part of the description)

- 2: gearbox control unit
- 4: a bottom housing section
- 6: top cover
- 8: valve unit
- 10: electronic control unit
- 12: flexible printed circuit
- 14: fixation plate assembly
- 16: fixation plate
- 18: valve block
- 20: receiving area
- 22: receiving means
- 24: coupling section
- 26: cutout of coupling section
- 28: first receiving hook
- 30: second receiving hook
- 32, 32': rails
- 34: locking means
- 36: cutout for receiving the locking means
- 38: locking hook
- 40: centring bore
- 42: first direction
- 44: outer edge of the fixation plate
- 46: first row
- 48: second row
- 50: first outer edge of the valve block
- 52: second outer edge of the valve block
- 54: second direction
- 56: top section
- 58: sloped surface
- 60: stopping means
- 62: threaded bore
- 64: tensioning screw

## Claims

1. A valve unit (8) for a gearbox control unit (2) of a commercial vehicle, said valve unit (8) comprising a valve block (18) and a flexible printed circuit (12) for connecting the valve unit (8) to the gearbox control unit (2),
wherein said valve unit (8) comprises a fixation plate assembly (14) comprising a fixation plate (16), wherein the flexible printed circuit (12) is attached to the fixation plate (16), and wherein said fixation plate assembly (14) is attached to said valve block (18)
**characterized by** at least one receiving means (22) arranged at the valve block (18), the receiving means (22) configured to couple pivotally with the fixation plate (16) and limit its movement in a first direction (42).

2. The valve unit (8) according to claim 1,
wherein the receiving means (22) comprises a first receiving hook (28), said first receiving hook (28) protruding from a top surface of said valve block (18) and wherein said first receiving hook (28) is configured to couple pivotally with the fixation plate (16).

3. The valve unit (8) according to claim 2,
wherein the receiving means (22) comprises a second receiving hook (30), said second receiving hook (30) protruding from said valve block (18) and being spaced apart from the first receiving hook (28), wherein the first receiving hook (28) and the second receiving hook (30) are configured to couple pivotally with the fixation plate (16).

4. The valve unit (8) according to any of the preceding claims,
wherein the fixation plate (16) comprises a coupling section (24) for coupling with the receiving means (22), wherein the coupling section (24) comprises a cutout (26) extending from an outer edge (44) of the fixation plate (16) inwardly.

5. The valve unit (8) according to any of the preceding claims,
wherein the valve block (18) comprises at least one rail (32, 32') configured to support the fixation plate assembly (14) when the fixation plate assembly (14) is mounted to the valve block (18).

6. The valve unit (8) according to the preamble of claim 1 or any of the preceding claims,
wherein the valve block (18) comprises at least one locking means (34) protruding from the valve block (18), and wherein the fixation plate (16) comprises at least one corresponding cutout (36) for receiving the locking means (34).

7. The valve unit (8) according to claim 6,
wherein the locking means (34) comprises at least one locking hook (38), said locking hook (38) limiting a movement of the fixation plate assembly (14) in a second direction (54), the second direction (54) being opposite of the first direction (42).

8. The valve unit (8) according to claim 7,
wherein said locking hook (38) comprises a top section (56) having a sloped surface (58), said sloped surface (58) being configured to push the fixation plate (16) towards the valve block (18) when the fixation plate assembly (14) is moved in the second direction (54).

9. The valve unit (8) according to claim 8,
wherein the valve block (18) comprises a stopping means (60) for limiting the movement of the fixation plate (16) in the second direction (54).

10. The valve unit (8) according to any of the preceding claims,
wherein the fixation plate (16) comprises at least one centre hole (40) and wherein the valve unit (8) comprises a corresponding threaded bore (62) configured for receiving a tensioning screw (64) to be guided through the centre hole (40), for fixing the fixation plate assembly (14) to the valve block (18).

11. The valve unit (8) according to claims 6-10,
wherein said locking means (34) comprise a plurality of locking hooks (38), wherein said locking hooks (38) are arranged in a row (46, 48), said row extending along the first direction (42).

12. The valve unit (8) according to claim 11,
wherein said locking hooks (38) are arranged in a first row (46) and a second row (48), said rows (46, 48) extending along the first direction (42), and wherein the first row (46) is parallel to the second row (48).

13. The valve unit (8) according to claim 12,
wherein said first row (46) is arranged at a first outer edge (50) of the valve block (18) and said second row (48) is arranged at a second outer edge (52) of the valve block (18), and wherein said first outer edge (50) is opposite from the second outer edge (52).

14. A gearbox control unit (2) for a commercial vehicle, said gearbox control unit (2) comprising:
a bottom housing section (4) configured to be attached to a gearbox of a vehicle,
a top cover (6), the top cover (6) being releasably attached to the bottom housing section (4),
a valve unit (8) accommodated within said bottom housing section (4),
**characterized in that**
the valve unit (8) is the valve unit (8) according to any of the preceding claims.

## Patentansprüche

1. Ventileinheit (8) für eine Getriebesteuereinheit (2) eines Nutzfahrzeugs, die Ventileinheit (8) umfassend einen Ventilblock (18) und eine flexible gedruckte Schaltung (12) zum Verbinden der Ventileinheit (8) mit der Getriebesteuereinheit (2),
wobei die Ventileinheit (8) eine Befestigungsplattenbaugruppe (14) umfasst, umfassend eine Befestigungsplatte (16), wobei die flexible gedruckte Schaltung (12) an der Befestigungsplatte (16) angebracht ist, und wobei die Befestigungsplattenbaugruppe (14) an dem Ventilblock (18) angebracht ist,
**gekennzeichnet durch** mindestens ein Aufnahmemittel (22), das an dem Ventilblock (18) angeordnet ist, wobei das Aufnahmemittel (22) konfiguriert ist, um mit der Befestigungsplatte (16) schwenkbar gekoppelt zu sein, und ihre Bewegung in einer ersten Richtung (42) zu begrenzen.

2. Ventileinheit (8) nach Anspruch 1,
wobei das Aufnahmemittel (22) einen ersten Aufnahmehaken (28) umfasst, wobei der erste Aufnahmehaken (28) von einer oberen Oberfläche des Ventilblocks (18) vorsteht, und wobei der erste Aufnahmehaken (28) konfiguriert ist, um mit der Befestigungsplatte (16) schwenkbar gekoppelt zu sein.

3. Ventileinheit (8) nach Anspruch 2,
wobei das Aufnahmemittel (22) einen zweiten Aufnahmehaken (30) umfasst, wobei der zweite Aufnahmehaken (30) von dem Ventilblock (18) vorsteht und von dem ersten Aufnahmehaken (28) beabstandet ist, wobei der erste Aufnahmehaken (28) und der zweite Aufnahmehaken (30) konfiguriert sind, um mit der Befestigungsplatte (16) schwenkbar gekoppelt zu sein.

4. Ventileinheit (8) nach einem der vorstehenden Ansprüche,
wobei die Befestigungsplatte (16) einen Kopplungsbereich (24) zum Koppeln mit dem Aufnahmemittel (22) umfasst, wobei der Kopplungsbereich (24) einen Ausschnitt (26) umfasst, der sich von einer Außenkante (44) der Befestigungsplatte (16) nach innen erstreckt.

5. Ventileinheit (8) nach einem der vorstehenden Ansprüche,
wobei der Ventilblock (18) mindestens eine Schiene (32, 32') umfasst, die konfiguriert ist, um die Befestigungsplattenbaugruppe (14) zu stützen, wenn die Befestigungsplattenbaugruppe (14) an dem Ventilblock (18) montiert ist.

6. Ventileinheit (8) nach dem Oberbegriff des Anspruchs 1 oder einem der vorstehenden Ansprüche,
wobei der Ventilblock (18) mindestens ein Verriegelungsmittel (34) umfasst, das von dem Ventilblock (18) vorsteht, und wobei die Befestigungsplatte (16) mindestens einen entsprechenden Ausschnitt (36) zum Aufnehmen des Verriegelungsmittels (34) umfasst.

7. Ventileinheit (8) nach Anspruch 6,
wobei das Verriegelungsmittel (34) mindestens einen Verriegelungshaken (38) umfasst, wobei der Verriegelungshaken (38) eine Bewegung der Befestigungsplattenbaugruppe (14) in einer zweiten Richtung (54) begrenzt, wobei die zweite Richtung (54) der ersten Richtung (42) entgegengesetzt ist.

8. Ventileinheit (8) nach Anspruch 7,
wobei der Verriegelungshaken (38) einen oberen Bereich (56) umfasst, der eine geneigten Oberfläche (58) aufweist, wobei die geneigte Oberfläche (58) konfiguriert ist, um die Befestigungsplatte (16) zu dem Ventilblock (18) hin zu drücken, wenn die Befestigungsplattenbaugruppe (14) in die zweite Richtung (54) bewegt wird.

9. Ventileinheit (8) nach Anspruch 8,
wobei der Ventilblock (18) ein Stoppmittel (60) zum Begrenzen der Bewegung der Befestigungsplatte (16) in der zweiten Richtung (54) umfasst.

10. Ventileinheit (8) nach einem der vorstehenden Ansprüche,
wobei die Befestigungsplatte (16) mindestens ein Mittelloch (40) umfasst, und wobei die Ventileinheit (8) eine entsprechende Gewindebohrung (62) umfasst, die konfiguriert ist zum Aufnehmen einer Spannschraube (64), die durch das Mittelloch (40) zum Befestigen der Befestigungsplattenbaugruppe (14) an dem Ventilblock (18) zu führen ist.

11. Ventileinheit (8) nach den Ansprüchen 6 bis 10,
wobei das Verriegelungsmittel (34) eine Vielzahl von Verriegelungshaken (38) umfassen, wobei die Verriegelungshaken (38) in einer Reihe (46, 48) angeordnet sind und sich die Reihe entlang der ersten Richtung (42) erstreckt.

12. Ventileinheit (8) nach Anspruch 11,
wobei die Verriegelungshaken (38) in einer ersten Reihe (46) und einer zweiten Reihe (48) angeordnet sind, wobei sich die Reihen (46, 48) entlang der ersten Richtung (42) erstrecken und wobei die erste Reihe (46) parallel zu der zweiten Reihe (48) ist.

13. Ventileinheit (8) nach Anspruch 12,
wobei die erste Reihe (46) an einer ersten Außenkante (50) des Ventilblocks (18) angeordnet ist, und die zweite Reihe (48) an einer zweiten Außenkante (52) des Ventilblocks (18) angeordnet ist, und wobei die erste Außenkante (50) der zweiten Außenkante (52) gegenüberliegt.

14. Getriebesteuereinheit (2) für ein Nutzfahrzeug, die Getriebesteuereinheit (2) umfassend:
einen unteren Gehäusebereich (4), der konfiguriert ist, um an einem Getriebe eines Fahrzeugs angebracht zu sein,
eine obere Abdeckung (6), wobei die obere Abdeckung (6) an dem unteren Gehäusebereich (4) lösbar angebracht ist,
eine Ventileinheit (8), die innerhalb des unteren Gehäusebereichs (4) untergebracht ist,
**dadurch gekennzeichnet, dass**
die Ventileinheit (8) die Ventileinheit (8) nach einem der vorstehenden Ansprüche ist.

## Revendications

1. Unité de soupapes (8) pour une unité de commande de boîte de vitesses (2) d'un véhicule utilitaire, ladite unité de soupapes (8) comprenant un bloc de soupapes (18) et un circuit imprimé flexible (12) pour connecter l'unité de soupapes (8) à l'unité de commande de boîte de vitesses (2),
dans laquelle ladite unité de soupapes (8) comprend un ensemble plaque de fixation (14) comprenant une plaque de fixation (16), dans laquelle le circuit imprimé flexible (12) est fixé à la plaque de fixation (16), et dans laquelle ledit ensemble plaque de fixation (14) est fixé audit bloc de soupapes (18)
**caractérisée par** au moins un moyen de réception (22) agencé au niveau du bloc de soupapes (18), le moyen de réception (22) étant configuré pour s'accoupler de manière pivotante avec la plaque de fixation (16) et limiter son mouvement dans une première direction (42).

2. Unité de soupapes (8) selon la revendication 1,
dans laquelle le moyen de réception (22) comprend un premier crochet de réception (28), ledit premier crochet de réception (28) faisant saillie à partir d'une surface supérieure dudit bloc de soupapes (18) et dans laquelle ledit premier crochet de réception (28) est configuré pour s'accoupler de manière pivotante avec la plaque de fixation (16).

3. Unité de soupapes (8) selon la revendication 2,
dans laquelle le moyen de réception (22) comprend un second crochet de réception (30), ledit second crochet de réception (30) faisant saillie à partir dudit bloc de soupapes (18) et étant espacé du premier crochet de réception (28), dans laquelle le premier crochet de réception (28) et le second crochet de réception (30) sont configurés pour s'accoupler de manière pivotante avec la plaque de fixation (16).

4. Unité de soupapes (8) selon l'une quelconque des revendications précédentes,
dans laquelle la plaque de fixation (16) comprend une section d'accouplement (24) pour l'accouplement avec le moyen de réception (22), dans laquelle la section d'accouplement (24) comprend une découpe (26) s'étendant vers l'intérieur à partir d'un bord externe (44) de la plaque de fixation (16).

5. Unité de soupapes (8) selon l'une quelconque des revendications précédentes,
dans laquelle le bloc de soupapes (18) comprend au moins un rail (32, 32') configuré pour supporter l'ensemble plaque de fixation (14) lorsque l'ensemble plaque de fixation (14) est monté sur le bloc de soupapes (18).

6. Unité de soupapes (8) selon le préambule de la revendication 1 ou l'une quelconque des revendications précédentes,
dans laquelle le bloc de soupapes (18) comprend au moins un moyen de verrouillage (34) faisant saillie du bloc de soupapes (18), et dans laquelle la plaque de fixation (16) comprend au moins une découpe correspondante (36) pour recevoir le moyen de verrouillage (34).

7. Unité de soupapes (8) selon la revendication 6,
dans laquelle le moyen de verrouillage (34) comprend au moins un crochet de verrouillage (38), ledit crochet de verrouillage (38) limitant un mouvement de l'ensemble plaque de fixation (14) dans une seconde direction (54), la seconde direction (54) étant à l'opposé de la première direction (42).

8. Unité de soupapes (8) selon la revendication 7,
dans laquelle ledit crochet de verrouillage (38) comprend une section supérieure (56) ayant une surface inclinée (58), ladite surface inclinée (58) étant configurée pour pousser la plaque de fixation (16) vers le bloc de soupapes (18) lorsque l'ensemble plaque de fixation (14) est déplacé dans la seconde direction (54).

9. Unité de soupapes (8) selon la revendication 8,
dans laquelle le bloc de soupapes (18) comprend un moyen d'arrêt (60) pour limiter le mouvement de la plaque de fixation (16) dans la seconde direction (54).

10. Unité de soupapes (8) selon l'une quelconque des revendications précédentes,
dans laquelle la plaque de fixation (16) comprend au moins un trou central (40) et dans laquelle l'unité de soupapes (8) comprend un alésage fileté correspondant (62) configuré pour recevoir une vis de mise en tension (64) devant être guidée à travers le trou central (40), pour fixer l'ensemble plaque de fixation (14) au bloc de soupapes (18).

11. Unité de soupapes (8) selon les revendications 6 à 10,
dans laquelle lesdits moyens de verrouillage (34) comprennent une pluralité de crochets de verrouillage (38), dans laquelle lesdits crochets de verrouillage (38) sont disposés dans une rangée (46, 48), ladite rangée s'étendant le long de la première direction (42).

12. Unité de soupapes (8) selon la revendication 11,
dans laquelle lesdits crochets de verrouillage (38) sont disposés dans une première rangée (46) et une seconde rangée (48), lesdites rangées (46, 48) s'étendant le long de la première direction (42), et dans laquelle la première rangée (46) est parallèle à la seconde rangée (48).

13. Unité de soupapes (8) selon la revendication 12,
dans laquelle ladite première rangée (46) est disposée au niveau d'un premier bord externe (50) du bloc de soupapes (18) et ladite seconde rangée (48) est disposée au niveau d'un second bord externe (52) du bloc de soupapes (18), et dans laquelle ledit premier bord externe (50) est à l'opposé du second bord externe (52).

14. Unité de commande de boîte de vitesses (2) pour un véhicule utilitaire, ladite unité de commande de boîte de vitesses (2) comprenant :
une section boîtier inférieur (4) configurée pour être fixée à une boîte de vitesses d'un véhicule,
un couvercle supérieur (6), le couvercle supérieur (6) étant fixé de manière amovible à la section boîtier inférieur (4),
une unité de soupapes (8) logée à l'intérieur de ladite section boîtier inférieur (4),
**caractérisée en ce que**
l'unité de soupapes (8) est l'unité de soupapes (8) selon l'une des revendications précédentes.
